# EUROPEAN PATENT APPLICATION

(11) **EP 3 910 222 A1**
(43) Date of publication of application: **17.11.2021**
(21) Application number: 20174753.2
(22) Date of filing: 14.05.2020
(51) Int. Cl.: F16L 19/065, F16L 19/08, F16L 33/22

(54) **HIGH PRESSURE FITTING FOR MULTILAYER PIPE**

(71) Applicant: Hidronix srl, 80031 Brusciano (NA) (IT); Esposito, Vincenzo, 80014 Giugliano in Campania (NA) (IT)
(72) Inventor: Esposito, Vincenzo, 80014 Giugliano in Campania (NA) (IT)
(74) Representative: Cardelli, Guido

(57) **Abstract**

A high pressure fitting (1) for multilayer pipe (2) has a connector (3) consisting of a tube stub (8), suitable for receiving an end of a multilayer pipe (2), and of a head (9) that is internally threaded and intended to be screwed to an attachment port (6) of an appliance, the head (9) having an external surface with a second portion (11) provided with an external thread (12); a tapered bushing (4), split, intended to be positioned on the multilayer pipe (2) opposite to the tube stub (8) of the connector (3); and a gland nut (5) suitable for tightening the tapered bushing (4) on the connector (3), the gland nut (5) being equipped with an externally prismatic part (13), provided with an internal thread (25) for engaging the external thread (12) of the connector (3), and with a frustoconical part (14) suitable to match the tapered bushing (4).

## Description

The present invention relates to a high pressure fitting for multilayer pipe. In particular, the fitting is intended for the connection of a multilayer pipe to an air conditioning device.

WO 2016/065651 A1 describes a fitting having a joint, a tube with a flared end, a clamping sleeve and a nut. The joint has a frustoconical end to receive the flared end of the tube. It is understood that the tube is made of metallic material. If the flared end is not carried out correctly, the seal between the frustoconical end of the joint and the flared end of the pipe may be inadequate to withstand high pressures and high temperatures.

US 3,362,731 discloses a high pressure fitting of the type having a gland nut cooperating with a collet to force one end of a pipe against a seat. The gland nut is equipped with a tapered hole, and a clamping sleeve is provided in the tapered hole of the gland nut. The collet is split in order to adhere to the external surface of the tube. The fitting described in this US document is of the female-male type and is not suitable for use with current air conditioning appliances that have male-female connection joints.

The current air conditioning appliances use copper pipes and relevant fittings that have drawbacks due to the metallic material of the pipes that are hardly deformable.

The present invention aims to create connections for a multilayer pipe that are suitable to operate at high pressure and temperature and do not have the drawbacks caused by the copper pipes and relevant fittings.

In particular, an object of the present invention is to provide a fitting for a multilayer pipe having, from the outside towards the inside, an external layer formed by a polyamide, a layer formed by a binder, an aluminum layer, a layer formed by a binder and an internal layer formed by a polyamide.

Therefore, the present invention provides a high pressure fitting for multilayer pipe, comprising a connector, a tapered bushing and a gland nut, wherein
- the connector consists of a tube stub, suitable for receiving an end of a multilayer pipe, and of a head that is internally threaded and intended to be screwed to an attachment port of an appliance, the head having an external surface with a first prismatic portion and a second portion provided with an external thread,
- the tapered bushing is split, and intended to be positioned on the multilayer pipe opposite to the tube stub of the connector, and
- the gland nut is an element suitable for tightening the tapered bushing on the connector, the gland nut being equipped with an externally prismatic part, provided with an internal thread for engaging the external thread of the connector, and with a frustoconical part suitable to match the tapered bushing.
Further features and advantages of the invention will become most clear from the description of the fitting, illustrated by way of example in the accompanying drawings, in which:
Figure 1 is a partially sectioned view of the fitting according to the present invention, joined to a portion of a multilayer pipe;
- Figure 2 is a longitudinal cross-section view of the fitting in Figure 1;
- Figure 3 is an exploded perspective view of the fitting in Figure 1 together with a connection joint of an air conditioner, not shown;
Figures 4 to 7 are a perspective view, a left end view, a side view and, respectively, a longitudinal cross-section view of a connector of the fitting according to the present invention;
Figures 8 to 10 schematically show a side view, a left end view of a tapered bushing of the fitting according to the present invention and, respectively, a longitudinal cross-section view according to the lines A-A in Figure 9; and
Figures 11 to 13 are a side view, a left end view of a gland nut of the fitting according to the present invention and, respectively, a longitudinal cross-section view according to the lines B-B in Figure 12.

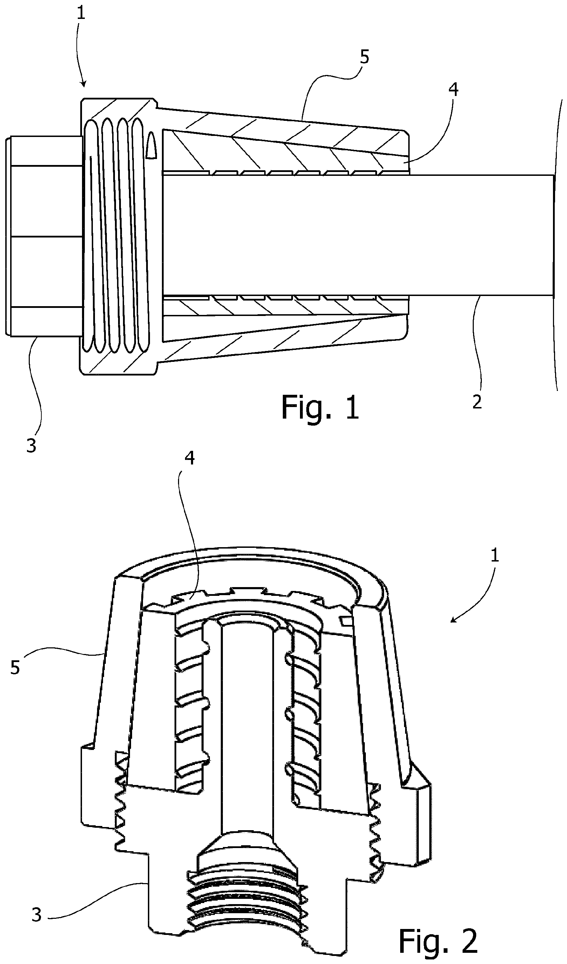

Reference is made initially to Figures 1 and 2 which are a partially sectioned view and a longitudinal cross-section view of the fitting 1 according to the present invention, joined to a portion of multilayer pipe 2, which is not cross-sectioned in Figure 1.

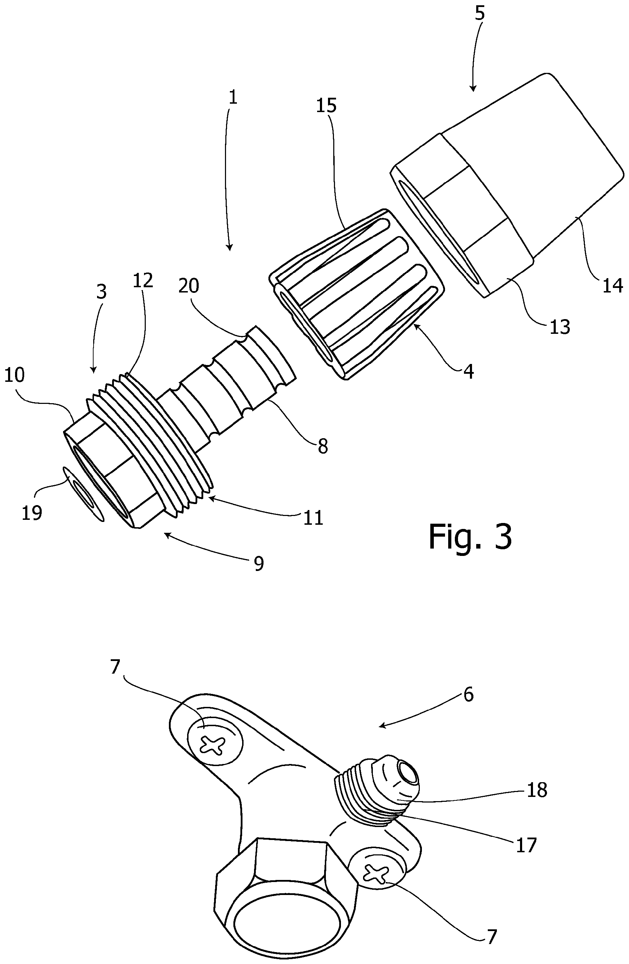

The fitting 1 comprises a connector 3 (not cross-sectioned in Figure 1), a tapered bushing 4, and a gland nut 5 acting on the tapered bushing 4 that operates as a clamp. Reference is made also to Figure 3 which is an exploded perspective view of the fitting 1 together with an attachment port 6. The attachment port 6 is fastened by screws 7 to an air conditioner or other appliance not shown. The connector 3 comprises a tube stub 8, suitable for receiving an end portion of the multilayer pipe 2, and a head 9 that is internally threaded for being screwed to the attachment port 6 of the air conditioner. The head 9 has an external surface with a first prismatic portion 10 and a second portion 11 provided with an external thread 12. The tapered bushing 4 is split, as will be better seen later, and is intended to be positioned on the multilayer pipe 2 on a side opposite to the tube stub 8 of the connector 3. The gland nut 5 is an element suitable for tightening the tapered bushing 4 on the connector 3. The gland nut 5 is equipped with an externally prismatic part 13, provided, as will be seen later, with an internal thread for engaging the external thread 12 of the connector 3. Furthermore, the gland nut 5 has a frustoconical part 14 suitable to match the frustoconical surface 15 of the tapered bushing 4.

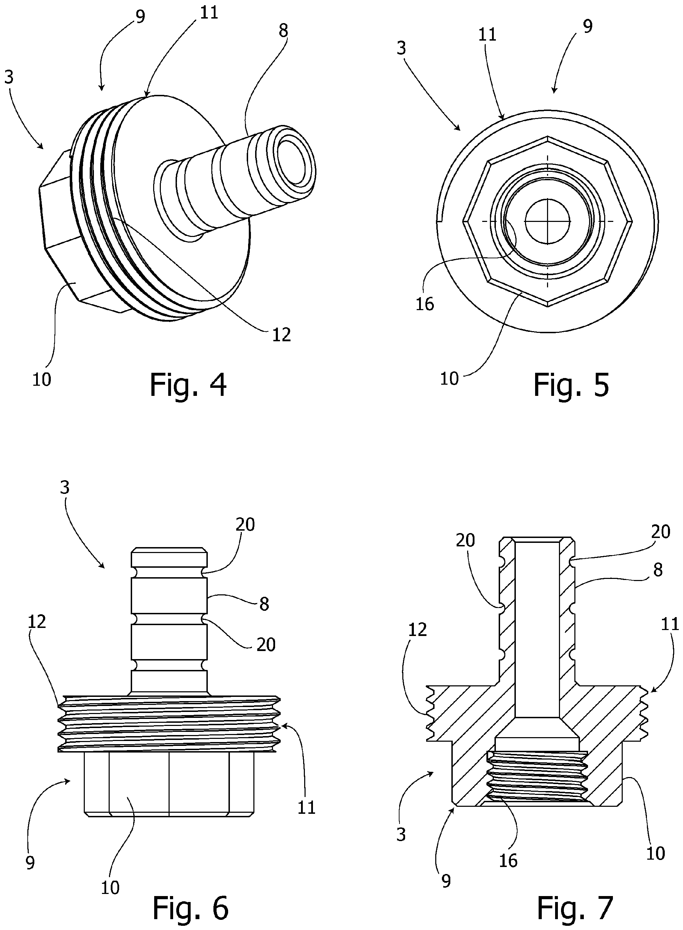

For a detailed description of the components of the fitting 1, initially reference is made to Figures 4 to 7 which are a perspective view, a left end view, a side view and, respectively, a longitudinal cross-section view of the connector 3. In particular, Figure 7 shows the internal thread 16 intended to engage the external thread 17 of a nipple 18 of the attachment port 6 of the air conditioner. A gasket 19 (Figure 3) is provided which guarantees a hermetic seal between the connector 3 and the nipple 18. The tube stub 8 of the connector 3 is externally provided with a succession of grooves, generally indicated as 20, by which the multilayer pipe 2 (Figure 1) is retained by the fitting 1.

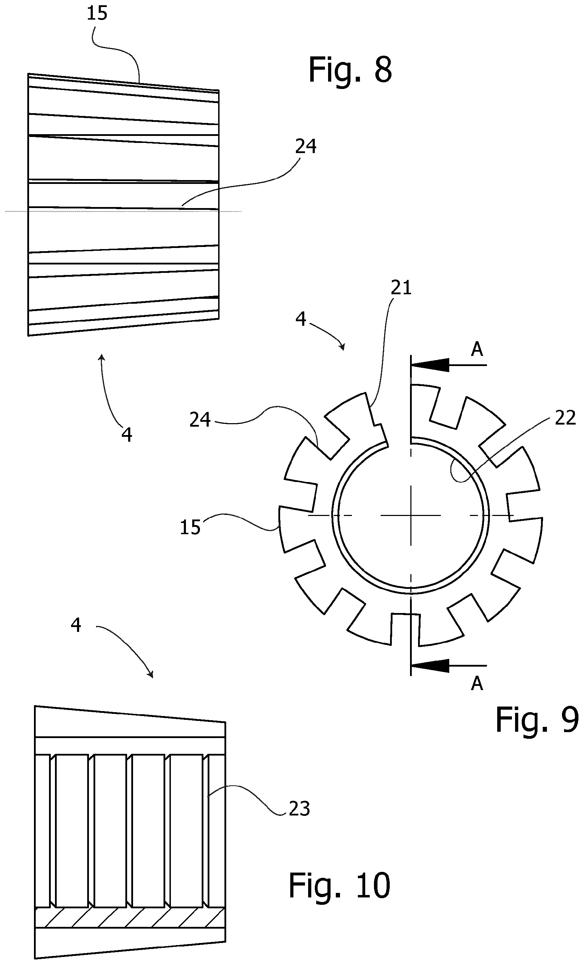

Now, reference is made to Figures 8 to 10 which are a side view, a left end view of the tapered bushing 4 and, respectively, a longitudinal cross-section view according to lines A-A in Figure 9. The tapered bushing 4 is split, as a longitudinal slot 21 is provided. The slot 21 allows the deformation of the tapered bushing 4 so as to exert a pressure on the multilayer pipe 2 to keep it adhering to the tube stub 8 of the connector 3.

In order to improve the retaining effect of the multilayer pipe 2 on the tube stub 8, the tapered bushing 4 has a cylindrical internal surface 22 equipped with a plurality of annular projections 23. Alternatively, the projections can be pointed forming a real toothing that hooks onto the multilayer pipe 2, preventing it from sliding.

The frustoconical external surface 15 of the tapered bushing 4 is provided with a plurality of grooves, generally indicated as 24, formed longitudinally. Optionally, the external lateral surface of the tapered bushing 4, as shown in Figure 3, can be partially cylindrical in a portion close to the abutment with the head 9 of the connector 3.

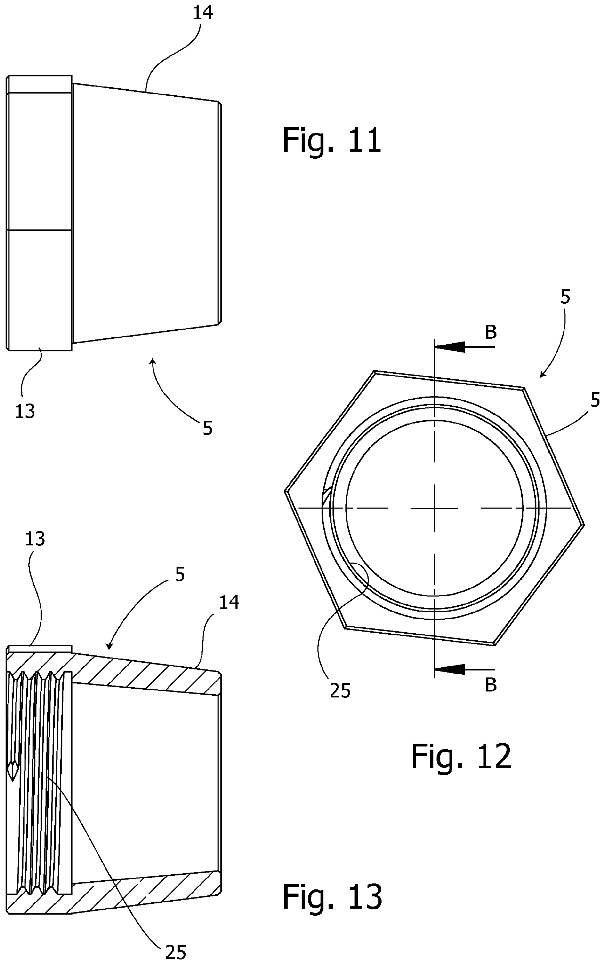

For a detailed description of the gland nut 5, reference is made to figures 11 to 13 which are a side view, a left end view of a gland nut of the fitting according to the present invention and, respectively, a longitudinal cross-section view according to lines B-B in Figure 12. Provided in correspondence with the prismatic part 13 of the gland nut 5 is an internal thread 25 intended to engage the external thread 12 of the second portion 11 of the head 9 of the connector 3.
The prismatic portion 10 of the head 9 of the connector 3 serves to facilitate the screwing of the connector 3 on the nipple 18 of the attachment port 6 of the air conditioner. In the same way, the prismatic part 13 of the gland nut 5 facilitates the screwing of the latter on the head 9 to tighten the multilayer tube 2 to the tube stub 8 of the connector 3 by the tapered bushing 4. Both the prismatic portion 10 and the prismatic part 13 can suitably be hexagonal in shape.

The fitting 1 according to the present invention proves to be particularly effective in the connection of multilayer pipes to appliances such as air conditioners. However, its use can be extended where it is deemed convenient. The fitting 1 can be made of plastic material, for example polyphenylsulfone, which is a thermoplastic material with high mechanical and chemical resistance, capable of withstanding high operating temperatures.

Alternatively, the fitting 1 can be made of metallic material, or some of its components can be made of metal and others of plastic. The dimensions of the fitting 1, in particular those relating to the diameter of the nipple of the attachment port and of the multilayer pipe, can be all those desired and normally used in the technical field.

The fitting according to the present invention can be provided at the end of a multilayer pipe so as to be distributed on the market ready for its use.

It is understood that the objects that the invention set itself are achieved. In particular, the advantages of the fitting in combination with a multilayer plastic pipe are clear, compared to the use of the classic copper pipe for connection with thermal appliances and conditioners in general. There are also significant advantages compared to other connections of the known art both from the construction point of view and from the point of view of use.

## Claims

1. A high pressure fitting (1) for multilayer pipe (2), comprising a connector (3), a tapered bushing (4) and a gland nut (5), **characterized in that**:
- the connector (3) consists of a tube stub (8), suitable for receiving an end of a multilayer pipe (2), and of a head (9) that is internally threaded and intended to be screwed to an attachment port (6) of an appliance, the head (9) having an external surface with a first prismatic portion (10) and a second portion (11) provided with an external thread (12),
- the tapered bushing (4) is split, and intended to be positioned on the multilayer pipe (2) opposite to the tube stub (8) of the connector (3), and
- the gland nut (5) is an element suitable for tightening the tapered bushing (4) on the connector (3), the gland nut (5) being equipped with an externally prismatic part (13), provided with an internal thread (25) for engaging the external thread (12) of the connector (3), and with a frustoconical part (14) suitable to match the tapered bushing (4).

2. The fitting according to claim 1, wherein the tube stub (8) of the connector (3) is externally provided with a succession of grooves (20).

3. The fitting according to claim 1, wherein the tapered bushing (4) has a cylindrical internal surface (22) provided with a plurality of annular projections (23).

4. The fitting according to claim 1, wherein the tapered bushing (4) has a frustoconical external surface (15) provided with a plurality of grooves (24) formed longitudinally.

5. The fitting according to claim 1, **characterized in that** the fitting is made of plastic material.

6. The fitting according to claim 5, **characterized in that** the plastic material is polyphenylsulfone.

7. The fitting according to claim 1, **characterized in that** the fitting is made at least partially of metallic material.
